# EUROPEAN PATENT SPECIFICATION

(11) **EP 3 608 128 B1**
(45) Date of publication and mention of the grant of the patent: **27.09.2023**
(21) Application number: 18780584.1
(22) Date of filing: 28.03.2018
(51) Int. Cl.: B60C 1/00, B60C 9/18, B60C 13/00, B60C 7/00, C08J 5/06, B60C 9/00, B60C 9/22, B60C 15/04

(54) **RESIN-METAL COMPOSITE MEMBER FOR TIRE, AND TIRE**
HARZ-METALL-VERBUNDSTOFFELEMENT FÜR REIFEN SOWIE REIFEN
ÉLÉMENT COMPOSITE RÉSINE-MÉTAL POUR PNEUMATIQUE, ET PNEUMATIQUE

(30) Priority: 06.04.2017 JP 2017075980
(43) Date of publication of application: 12.02.2020
(73) Proprietor: Bridgestone Corporation, Tokyo 104-8340 (JP)
(72) Inventor: SUZUKI, Takahiro, Tokyo 104-8340 (JP); KON, Seiji, Tokyo 104-8340 (JP)
(74) Representative: Marks & Clerk LLP
(86) International application number: PCT/JP2018/012979
(87) International publication number: WO 2018/186271

(56) References cited:
- WO-A1-2007/083387
- WO-A1-2014/171462
- WO-A1-2016/084536
- JP-A- 2011 042 235
- JP-A- 2011 042 235
- JP-A- 2015 007 299
- JP-A- 2016 056 375
- JP-A- 2016 056 375
- US-A1- 2015 064 438

## Description

### [Technical Field]

The present invention relates to a metal-resin composite member for a tire, and a tire.

### [Background Art]

In recent years, development of tires using a resin material as a structural member of the tire has been progressing in view of weight reduction, ease of molding, ease of recycling and the like. As a method for improving the durability of a tire including a resin material, a method of winding a reinforcing cord around a main body of a tire formed of resin (hereinafter, also referred to as a tire frame) in a spiral manner has been proposed.

In order to improve the durability of a tire having a structure as mentioned above, it is important to improve adhesion durability between a tire frame and a reinforcing cord. In view of this, a method for lessening, by a resin layer, a difference in rigidity between a metal cord and a tire frame by using a reinforcing cord, which is obtained by coating a metal cord with a resin layer, so as to improve adhesion durability of the tire frame and the metal cord has been considered. For example, a tire using a reinforcing cord, which is obtained by providing a resin layer on a metal cord via an adhesive layer, is described in International Publication (WO) No. 2014/175453). Reference can also be made to disclosures of tire structures and materials in JP2011-042235A, WO 2016/084536 A1, JP 2016-056375A and US 2015/064438 A1, which discloses a cord suitable for use in a conventional tire of vulcanised rubber comprising a plurality of metallic strands wherein the strands are aligned parallel to each other to form a planar array, the strands, are encapsulated by a polymeric or rubber sheath.

### [Summary of the Invention]

### [Problem to be Solved by the Invention]

For a reinforcing cord, in which a resin layer is provided on a metal cord via an adhesive layer, it is important for adhesion durability among the respective members to be excellent. One method to improve the adhesion durability among the respective members is to select suitable types of materials for the respective members, but the materials that can be used in this method are limited. Therefore, development of technology for improving adhesion durability, without restriction on the selection of materials, has been desired. In addition, development of a metal-resin composite member for a tire that exhibits excellent adhesion durability at an interface between an adhesive layer and a resin layer, and a tire including the metal-resin composite member, have been anticipated.

### [Means for Implementing the Invention]

A metal-resin composite member for a tire, comprising plural metal cords that are positioned alongside each other, an adhesive layer that is disposed on the metal cords, and a resin layer that is disposed on the adhesive layer, wherein:
the adhesive layer is integrally disposed on all of the plural metal cords, and when a cross-section of the metal-resin composite member is viewed perpendicularly to a length direction of the metal cords, a region consisting of the metal cords and the adhesive layer has a cross-sectional shape that has, between the metal cords, a portion that is narrower in width than a portion at which the metal cords are disposed,
wherein the term width of a section of the region consisting of metal cords and adhesive layer refers to a dimension of the region in a direction perpendicular to a line that connects the metal cords, and
wherein the resin layer does not contain vulcanized rubber.

### [Effect of the Invention]

According to the invention, a metal-resin composite material for a tire that exhibits excellent adhesion durability at an interface between an adhesive layer and a resin layer, and a tire having the metal-resin composite material for a tire are provided.

### [Brief Description of the Drawings]

Fig. 1 is a schematic sectional view of the composite member that is viewed perpendicularly to a length direction of metal cords.
Fig. 2 is a schematic sectional view of a tire in which the composite member is disposed.

### [Embodiments for Implementing the Invention]

In the following, embodiments of the invention are explained in detail. However, the invention is not limited to these embodiments, and may be implemented with appropriate modifications within the scope of the appended claims.

In the specification, the "resin" refers to a concept that encompasses a thermoplastic resin, a thermoplastic elastomer and a thermosetting resin, but does not encompass a vulcanized rubber.

In the specification, the" thermoplastic resin" refers to a polymer compound that becomes soft and flowable as the temperature is increased and becomes relatively hard and stiff upon cooling, but does not have a rubber-like elasticity.

In the specification, the "thermoplastic elastomer" refers to a polymer compound that becomes soft and flowable as the temperature is increased and becomes relatively hard and stiff upon cooling, and has a rubber-like elasticity. The thermoplastic elastomer is a copolymer including a polymer that forms a hard segment, which is crystalline and has a high melting point or a high cohesion force, and a polymer that forms a soft segment, which is non-crystalline and has a low glass transition temperature.

In the specification, the numerical range expressed by "A to B" includes A and B as the minimum and maximum values, respectively.

### <Metal-resin composite member for tire>

The metal-resin composite member for a tire (hereinafter, also referred to as a composite member) of the invention includes plural metal cords that are positioned alongside each other, an adhesive layer that is disposed on the metal cords, and a resin layer that is disposed on the adhesive layer, and satisfies at least the following (1).

In the above configuration, the term "positioned alongside each other" refers to a state in which plural metal cords are positioned so as not to intersect, in a composite material having a length that is necessary to apply the same to a tire.
(1) the adhesive layer is integrally disposed on all of the plural metal cords, and when a cross-section of the metal-resin composite member is viewed perpendicularly to a length direction of the metal cords, a region consisting of the metal cords and the adhesive layer has a cross-sectional shape that has, between the metal cords, a portion that is narrower in width than a portion at which the metal cords are disposed.

The inventors have found that the composite member that satisfies at least (1) exhibits excellent adhesion durability at an interface between an adhesive layer and a resin layer. The reason for this is not clear, but it is considered that the shape of the adhesive layer, disposed on the metal cord, has an effect to improve the adhesion durability by satisfying at least (1).

The composite member has at least a portion that satisfies (1). Further, the composite member may have a portion that does not satisfy (1), as long as an effect of improving adhesion durability is achieved.

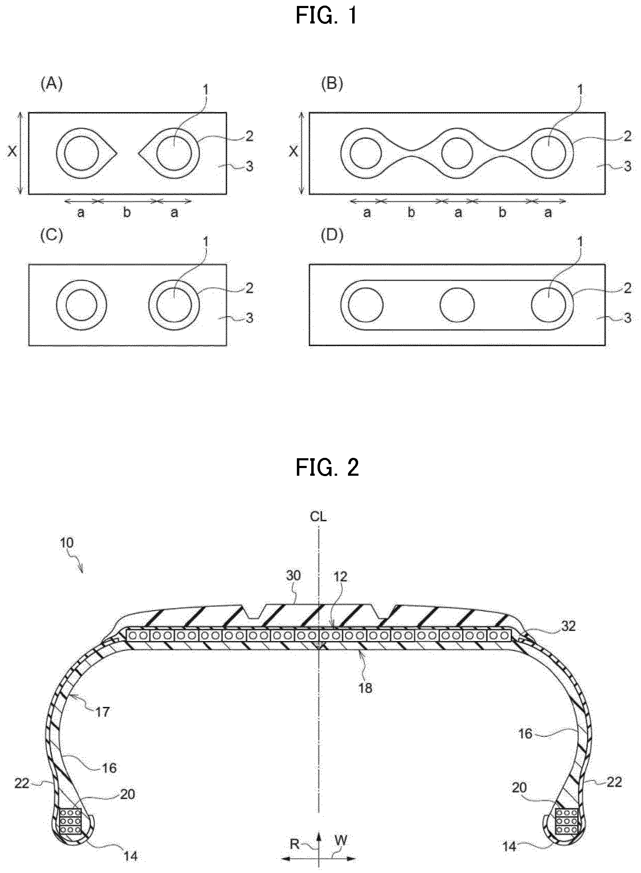

In Fig. 1, (B) is a schematic view of a section of a composite member that satisfies (1). In the composite member shown as (B) in Fig. 1, adhesive layer 2 is integrally disposed on all of metal cords 1, and resin layer 3 is disposed thereon. When the composite member is viewed perpendicularly to a length direction of the metal cords, the cross-sectional shape of a region consisting of metal cords 1 and adhesive layer 2 has, between metal cords 1, a portion that is narrower in width than the portions at which metal cord 1 is disposed.

The term "width" of a section of the region consisting of metal cords 1 and adhesive layer 2 refers to a dimension of the region in a direction perpendicular to a line that connects the metal cords (indicated by X in Fig. 1). The term "portion at which a metal cord is disposed" refers to a portion at which a line, which is perpendicular to the line that connects the metal cords, overlaps a section of the metal cord (indicated by a in Fig. 1). The term "between metal cords" refers to a portion between the portions at which a metal cord is disposed (indicated by b in Fig. 1).

When the composite member satisfies (1), the shape of the region consisting of metal cords 1 and adhesive layer 2 preferably has, between metal cords 1, a portion that is narrower in width than a diameter of a section of metal cords 1.

The method of preparing the composite member is not particularly limited. For example, the composite member can be prepared by extrusion molding using metal cords 1, a material for forming adhesive layer 2, and a material for forming resin layer 3. In that case, the cross-sectional shape of adhesive layer 2 can be adjusted by a shape of a die used for extrusion molding, or the like.

The composite member is suitably used as a member for a tire. The position of the composite member in the tire is not particularly limited. For example, the composite member may be used at a crown portion, a bead portion, and the like of a tire frame. The composite member may be used alone (single-layer) or in combination of two or more (multi-layer).

The dimension of the composite member is not particularly limited. From the viewpoint of achieving both reinforcement and weight reduction of a tire, the total thickness (dimension in a direction indicated by X in Fig. 1) is preferably from 0.5 mm to 3 mm. The distance between the metal cords (dimension of a portion indicated by b in Fig. 1) is not particularly limited, and is preferably from 0.1 mm to 3 mm.

### [Metal cord]

The metal cord is not specifically limited, and a metal cord used for reinforcing a conventional rubber tire or the like may be used. The metal cord may be, for example, a monofilament formed of a single metal cord or a multifilament formed of twisted plural metal cords. The shape of a section, the size (diameter) or the like of the metal cord is not specifically limited, and may be selected depending on the purpose or the like of the composite member. The material for the metal cord is not specifically limited, and may be steel or the like.

When the metal cord is formed of twisted plural cords, the number of the cords is not specifically limited. For example, the number of the cords may be selected from 2 to 10, preferably from 5 to 9.

From the viewpoint of achieving an excellent effect of reinforcing a tire while reducing the weight thereof, the diameter of the metal cord is preferably from 0.2 mm to 2 mm, more preferably from 0.8 mm to 1.6 mm.

When the metal cord is a single metal cord, the measured value of the diameter refers to a diameter of a section (a maximum value of a distance between the randomly selected two points on a profile of a section of the metal cord). When the metal cord is formed of plural metal cords, the measured value of the diameter refers to a diameter of a smallest circle that encompasses all of the sections of the plural metal cords observed at a section of the metal cord.

The tensile elastic modulus of the metal cord (hereinafter, the elastic modulus in the specification refers to a tensile elastic modulus, unless otherwise specified) is generally approximately from 100,000 MPa to 300,000 MPa, preferably from 120,000 MPa to 270,000 MPa, more preferably from 150,000 MPa to 250,000 MPa. The tensile elastic modulus of the metal cord is calculated from a slope of a stress-strain curve obtained by using a tensile tester with a Zwick chuck.

The breaking elongation (tensile breaking elongation) of the metal cord is generally approximately from 0.1% to 15%, preferably from 1% to 15%, more preferably from 1% to 10%. The tensile breaking elongation of the metal cord is calculated from a strain of a stress-strain curve obtained by using a tensile tester with a Zwick chuck.

### [Adhesive layer]

The material for the adhesive layer is not specifically limited, and examples thereof include a thermoplastic resin.

Examples of the thermoplastic resin that may be included in the adhesive layer include modified polyolefin resin (such as modified polyethylene resin and modified polypropylene resin), polyamide resin, polyurethane resin, polyester resin, ethylene-ethyl acrylate copolymer and ethylene-vinyl acetate copolymer. Among these, from the viewpoint of adhesion between the metal cord and the resin layer, at least one selected from the group consisting of modified polyolefin resin, polyester resin, modified polyester resin, ethylene-ethyl acrylate copolymer and ethylene-vinyl acetate copolymer is preferred, modified polyolefin resin is more preferred, and acid-modified polyolefin resin is further preferred. The adhesive layer may include a single kind of thermoplastic material or may include two or more thereof.

The material for the adhesive layer is preferably selected depending on the type of the resin layer as described later. For example, an acid-modified polyolefin resin is preferred when the resin layer is polyamide thermoplastic elastomer, and a modified polyester resin is preferred when the resin layer is polyester thermoplastic elastomer.

When the adhesive layer includes a thermoplastic resin, the content thereof is preferably 50% by mass or more, more preferably 70% by mass or more, further preferably 90% by mass or more, with respect to the total adhesive layer.

In the specification, the "acid-modified polyolefin resin" refers to an polyolefin resin that is modified with at least one of an unsaturated carboxylic acid or an anhydride thereof, and specific examples thereof include a polyolefin to which an unsaturated carboxylic acid or the like is chemically bonded (addition reaction, graft reaction or the like), such as a polyolefin into which at least one of an unsaturated carboxylic acid or an anhydride thereof is introduced by graft copolymerization.

Examples of the unsaturated carboxylic acid include acrylic acid, methacrylic acid, maleic acid, fumaric acid and itaconic acid. Examples of the polyolefin resin include polyethylene resin, polypropylene resin and polybutadiene resin.

From the viewpoint of resistance to changes in temperature or humidity, and adhesion durability between the metal cord and the resin layer, the acid-modified polyolefin resin is preferably at least one selected from the group consisting of maleic acid-modified polyethylene resin and a maleic acid-modified polypropylene resin.

The adhesive layer is preferably formed by using a hot melt adhesive.

In the specification, the "hot melt adhesive" refers to an adhesive including a thermoplastic resin as a main component and having a solid content of 95% by mass or more, preferably 99% by mass or more, more preferably 99.5% by mass or more, further preferably 100% by mass, and is in the form of a solid or a semisolid under ordinary temperature (room temperature) and becomes molten by heating.

Since the hot melt adhesive is bonded to an object by applying the same in a melted state while heating, and solidifying the same by cooling, tight adhesion can be achieved even if the object has a rough surface. Therefore, the metal cord and the resin layer can be tightly fixed and the adhesive durability is further improved. In addition, the hot melt adhesive has an advantage in terms of environment or productivity, since it contains a small amount of organic solvent or does not contain the same, and does not require a process for removing the solvent.

The adhesive layer may include a component other than the thermoplastic resin. Examples of the component include carbon black, a radical trapper, a rubber, a filler (such as silica, calcium carbonate and clay), an anti-aging agent, an oil, a plasticizer, a color former and a weatherproof agent.

From the viewpoint of improving the adhesion of the adhesive layer with respect to the metal cord, the adhesive layer may include carbon black. Examples of the carbon black include furnace black obtained by a furnace method, channel black obtained by a channel method, acetylene black obtained by an acetylene method, and thermal black obtained by a thermal method. The type of the carbon black is not particularly limited, and may be used alone or in combination of two or more kinds.

From the viewpoint of improving the adhesion of the adhesive layer with respect to the metal cord, the content of the carbon black in the adhesive layer is preferably 0.2% by mass or more, more preferably 0.4% by mass or more, further preferably 0.5% by mass or more, with respect to the total adhesive layer.

From the viewpoint of maintaining the durability of the adhesive layer, the content of the carbon black in the adhesive layer is preferably 5% by mass or less, more preferably 3% by mass or less, further preferably 2% by mass or less, with respect to the total adhesive layer.

Specific examples of the carbon black include those with product names of ASAHI #8, ASAHI #66, ASAHI #70, ASAHI #78, ASAHI #80, ASAHI #15HS, SBX55 and HS-500 from Asahi Carbon Co., Ltd.; and those with product names of 9H, 9, 7HM600 and 5H from Tokai Carbon Co., Ltd. Specific examples of the masterbatch include a masterbatch with a product name of BEK-8136-A from Nippon Pigment Co., Ltd. and a masterbatch with a product name of BLACK PBF-640 from Resino Color Industry Co., Ltd.

### [Resin layer]

The material for the resin layer is not particularly limited, and may be at least one selected from the group consisting of a thermoplastic resin and a thermoplastic elastomer, for example. The resin layer preferably includes a thermoplastic elastomer, more preferably at least one selected from the group consisting of polyamide thermoplastic elastomer (TPA) and polyester thermoplastic elastomer (TPC). The thermoplastic resin or the thermoplastic elastomer included in the resin layer may be alone or a combination of two or more kinds.

When the resin layer includes at least one selected from the group consisting of a thermoplastic resin and a thermoplastic elastomer, the content thereof is preferably 50% by mass or more, more preferably 70% by mass or more, further preferably 90% by mass or more, with respect to the total resin layer.

When the resin layer includes a thermoplastic elastomer, the content thereof is preferably 50% by mass or more, more preferably 70% by mass or more, further preferably 90% by mass or more, with respect to the total of the thermoplastic resin and the thermoplastic elastomer.

Since the type and preferred embodiments of the thermoplastic elastomer included in the resin layer may be the same as that of a thermoplastic elastomer used in a tire frame described later, details thereof are not described herein.

Examples of the thermoplastic resin included in the resin layer include a polyamide thermoplastic resin, a polyester thermoplastic resin, a polyolefin thermoplastic resin, a polyurethane thermoplastic resin, a vinyl chloride thermoplastic resin, and a polystyrene thermoplastic resin. The thermoplastic resin may be used alone or in combination of two or more kinds. Among these thermoplastic resins, at least one selected from the group consisting of a polyamide thermoplastic resin, a polyester thermoplastic resin and a polyolefin thermoplastic resin is preferred.

### -Polyamide thermoplastic resin-

Examples of the polyamide thermoplastic resin include a polyamide that forms a hard segment of a polyamide thermoplastic elastomer to be used for a tire frame as described later.

Specific examples of the polyamide thermoplastic resin include a polyamide obtained by ring-opening polycondensation of ε-caprolactam (amide 6), a polyamide obtained by ring-opening polycondensation of undecane lactam (amide 11), a polyamide obtained by ring-opening polycondensation of lauryl lactam (amide 12), a polyamide obtained by polycondensation of a diamine and a dibasic acid (amide 66), and a polyamide having m-xylylenediamine as a constituent unit (amide MX).

Amide 6 may be expressed by {CO-(CH₂)₅-NH}ₙ, for example. Amide 11 may be expressed by {CO-(CH₂)₁₀-NH}ₙ, for example. Amide 12 may be expressed by {CO-(CH₂)₁₁-NH}ₙ, for example. Amide 66 may be expressed by CO(CH₂)₄CONH(CH₂)₆NH}ₙ, for example. Amide MX may be expressed by the following Formula (A-1). In the formulas, n represents the number of repeating units.

As a commercial product of amide 6, for example, UBE NYLON series (such as 1022B and 1011FB) from Ube Industries, Ltd. can be used. As a commercial product of amide 11, for example, RILSAN B series from ARKEMA can be used. As a commercial product of amide 12, for example, UBE NYLON series (such as 3024U, 3020U and 3014U) from Ube Industries, Ltd. can be used. As a commercial product of amide 66, for example, UBE NYLON series (such as 2020B and 2015B) from Ube Industries, Ltd. can be used. As a commercial product of amide MX, for example, MX NYLON series (such as S6001, S6021 and S6011) from Mitsubishi Gas Chemical Company, Inc. can be used.

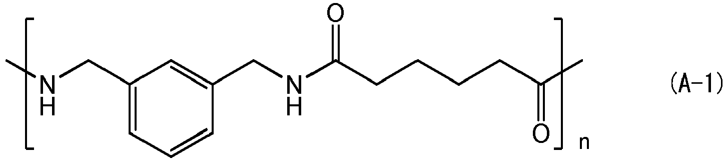

The polyamide thermoplastic resin may be a homopolymer that consists only of the aforementioned structural unit, or a copolymer of the structural unit and other monomers. When the polyamide thermoplastic resin is a copolymer, the content of the structural unit as described above is preferably 40% by mass or more.

### -Polyester thermoplastic resin-

Examples of the polyester thermoplastic resin include a polyester that forms a hard segment of a polyester thermoplastic elastomer to be used for a tire frame to be described later.

Specific examples of the polyester thermoplastic resin include an aliphatic polyester such as polylactic acid, polyhydroxy-3-butyl butyrate, polyhydroxy-3-hexyl butylate, poly(ε-caprolactone), polyenanthonolactone, polycaprylolactone and polybutylene adipate; and an aromatic polyester such as polyethylene terephthalate, polybutylene terephthalate, polyethylene naphthalate and polybutylene naphthalate. Among these, from the viewpoint of heat resistance and processability, polybutylene terephthalate is preferred.

As a commercial product of the polyester thermoplastic resin, for example, DURANEX series (such as 2000 and 2002) from Polyplastics Co., Ltd., NOVADURAN series (such as 5010R5 and 5010R3-2) from Mitsubishi Engineering-Plastics Corporation, and TORAYCON series (such as 1401X06 and 1401X31) from Toray Industries, Inc. may be used.

### -Polyolefin thermoplastic resin-

Examples of the polyolefin thermoplastic resin include a polyolefin that forms a hard segment of a polyolefin thermoplastic elastomer to be used for a tire frame to be described later.

Specific examples of the polyolefin thermoplastic resin include polyethylene thermoplastic resin, polypropylene thermoplastic resin and polybutadiene thermoplastic resin. Among these, from the viewpoint of heat resistance and processability, polypropylene thermoplastic resin is preferred.

Specific examples of the polypropylene thermoplastic resin include a propylene homopolymer, a propylene-α-olefin random copolymer and a propylene-α-olefin block copolymer. Examples of the α-olefin include α-olefins having approximately from 3 to 20 carbon atoms, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradodecene, 1-hexadecene, 1-octadecene and 1-eicosene.

The resin layer may be in the form that includes both a thermoplastic resin and a thermoplastic elastomer, where the thermoplastic resin forms a sea phase (matrix phase) and the thermoplastic elastomer forms an island phase (dispersed phase). When the resin layer has a sea-island structure in which the thermoplastic elastomer is dispersed in a matrix of the thermoplastic resin, pulling durability of the metal cord with respect to the resin layer can be further improved.

The mass ratio of the thermoplastic resin (p) and the thermoplastic elastomer (e) in the sea-island structure (p/e) is preferably from 95/5 to 55/45, more preferably from 90/10 to 60/40, further preferably from 85/15 to 70/30, from the viewpoint of ease of forming the sea-island structure.

Whether or not the island phase including the thermoplastic elastomer is dispersed in the sea phase including the thermoplastic resin, in the resin layer, can be determined by observing an image obtained with a SEM (scanning electron microscope).

The size (longest diameter) of the island phase including the thermoplastic elastomer is preferably approximately from 0.4 µm to 10.0 µm, more preferably approximately from 0.5 µm to 7 µm, further preferably approximately from 0.5 µm to 5 µm. The size of each island can be measured by observing an image obtained with a SEM.

The material for the resin layer is preferably selected in view of the adhesion with respect to the resin material used for a tire frame. For example, adhesion between the resin layer and the tire frame can be further improved by using a thermoplastic elastomer or a thermoplastic resin for the resin layer that is the same kind as the resin material that forms the tire frame. For example, when a polyamide thermoplastic elastomer or a polyamide thermoplastic resin is used for the resin layer, a polyamide thermoplastic elastomer or a polyamide thermoplastic resin is preferably used as the resin material for the tire frame.

In the specification, the "resins of the same kind" refers to resins having a main-chain structure (of a hard segment when the resin is a thermoplastic elastomer) in common, such as a combination of polyamides. The combination of the resins of the same kind includes a combination of a thermoplastic resin and a thermoplastic elastomer, a combination of thermoplastic resins, and a combination of thermoplastic elastomers.

The resin layer may include a component other than a resin. Examples of the other components include a filler (such as silica, calcium carbonate and clay), an anti-aging agent, an oil, a plasticizer, a color former and a weathering stabilizer.

When the resin layer includes a component other than a resin, the total content thereof is preferably 10% by mass or less, more preferably 5% by mass or less, with respect to the total resin layer.

### <Tire>

The tire of the present invention includes a tire frame and a metal-resin composite member for a tire as described above.

The details and preferred embodiments of the metal-resin composite member for a tire (composite member) are as mentioned above.

The position for the composite member to be disposed at the tire of the invention is not particularly limited. For example, the composite material may be disposed at a crown portion of a tire frame as a reinforcing member (such as a belt member), at a bead portion bead member, or at other portions.

The tire frame is preferably formed from a resin material. Examples of a resin included in the resin material include a thermoplastic resin, a thermoplastic elastomer and a thermosetting resin. From the viewpoint of weldability, the resin material preferably includes a thermoplastic elastomer, more preferably a polyamide thermoplastic elastomer.

Examples of the thermosetting resin include phenol thermosetting resin, urea thermosetting resin, melamine thermosetting resin and epoxy thermosetting resin.

Examples of the thermoplastic resin include polyamide thermoplastic resin, polyester thermoplastic resin, polyolefin thermoplastic resin, polyurethane thermoplastic resin, polyvinyl chloride thermoplastic resin and polystyrene thermoplastic resin. Among these, the thermoplastic resin is preferably at least one selected from the group consisting of polyamide thermoplastic resin, polyester thermoplastic resin and polyolefin thermoplastic resin, more preferably at least one selected from the group consisting of polyamide thermoplastic resin and polyolefin thermoplastic resin.

Examples of the thermoplastic elastomer include polyamide thermoplastic elastomer (TPA), polystyrene thermoplastic elastomer (TPS), polyurethane thermoplastic elastomer (TPU), polyolefin thermoplastic elastomer (TPO), polyester thermoplastic elastomer (TPEE), thermoplastic rubber vulcanizate (TPV), and other thermoplastic elastomers (TPZ). The definition and the classification of the thermoplastic elastomer may rely on JIS K 6418:2007.

From the viewpoint of achieving elasticity required during running a car and formability during manufacture, the resin material for forming a tire frame is preferably a thermoplastic resin, more preferably a thermoplastic elastomer. In addition, when a polyamide thermoplastic resin is used for the resin layer in the composite member, a polyamide thermoplastic elastomer is preferably used for the tire frame.

### Polyamide thermoplastic elastomer

The polyamide thermoplastic elastomer refers to a thermoplastic resin material that is a copolymer formed of a polymer that forms a hard segment that is crystalline and has a high melting point and a polymer that forms a soft segment that is amorphous and has a low glass transition temperature, wherein the polymer that forms a hard segment includes an amide bond (-CONH-) in its main chain.

Examples of the polyamide thermoplastic elastomer include a material in which at least a polyamide forms a hard segment that is crystalline and has a high melting point, and a polymer other than the polyamide (such as polyester or polyether) forms a soft segment that is amorphous and has a low glass transition temperature.

The polyamide thermoplastic elastomer may be formed by using a chain elongating agent (such as a dicarboxylic acid) in addition to the hard segment and the soft segment.

Specific examples of the polyamide thermoplastic elastomer include the polyamide thermoplastic elastomer (TPA) as defined in JIS K6418:2007 and the polyamide elastomer described in JP-A No. 2004-346273.

In the polyamide thermoplastic elastomer, examples of the polyamide that forms a hard segment include a polyamide formed from a monomer represented by the following Formula (1) or Formula (2).

H₂N-R¹-COOH (1)

In Formula (1), R¹ represents a hydrocarbon molecular chain having 2 to 20 carbon atoms (for example, an alkylene group having 2 to 20 carbon atoms).

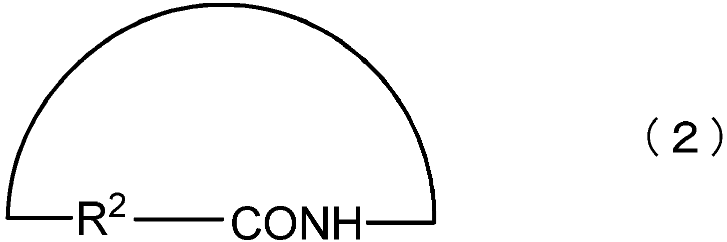

In Formula (2), R² represents a hydrocarbon molecular chain having 3 to 20 carbon atoms (for example, an alkylene group having 3 to 20 carbon atoms).

In Formula (1), R¹ is preferably a hydrocarbon molecular chain having 3 to 18 carbon atoms (for example, an alkylene group having 3 to 18 carbon atoms), more preferably a hydrocarbon molecular chain having 4 to 15 carbon atoms (for example, an alkylene group having 4 to 15 carbon atoms), further preferably a hydrocarbon molecular chain having 10 to 15 carbon atoms (for example, an alkylene group having 10 to 15 carbon atoms).

In Formula (2), R² is preferably a hydrocarbon molecular chain having 3 to 18 carbon atoms (for example, an alkylene group having 3 to 18 carbon atoms), more preferably a hydrocarbon molecular chain having 4 to 15 carbon atoms (for example, an alkylene group having 4 to 15 carbon atoms), further preferably a hydrocarbon molecular chain having 10 to 15 carbon atoms (for example, an alkylene group having 10 to 15 carbon atoms).

Examples of the monomer represented by Formula (1) or Formula (2) include a ω-aminocarboxylic acid and a lactam. Examples of the polyamide that forms a hard segment include a polycondensate of a ω-aminocarboxylic acid or a lactam, and a polycondensate of a diamine and a dicarboxylic acid.

Examples of the ω-aminocarboxylic acid include aliphatic ω-aminocarboxylic acids having 5 to 20 carbon atoms, such as 6-aminocaproic acid, 7-aminoheptanoic acid, 8-aminooctanoic acid, 10-aminocapric acid, 11-aminoundecanoic acid and 12-aminododecanoic acid.

Examples of the lactam include aliphatic lactams having 5 to 20 carbon atoms, such as lauryllactam, ε-caprolactam, undecalactam, ω-enantholactam and 2-pyrrolidone.

Examples of the diamine include aliphatic diamines having 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-triemthylhexamethylenediamine, 2,4,4-trimethylhexamethylenediamine, 3-methylpentamethylenediamine and m-xylylenediamine.

The dicarboxylic acid may have a structure represented by HOOC-(R³)ₘ-COOH (R³ is a hydrocarbon molecular chain having 3 to 20 carbon atoms, and m is 0 or 1), and examples thereof include aliphatic dicarboxylic acids having 2 to 20 carbon atoms, such as oxalic acid, succinic acid, glutaric acid, adipic acid, pimelic acid, subric acid, azelaic acid, sebacic acid and dodecanedioic acid.

As the polyamide that forms a hard segment, a polyamide obtained by ring-opening polycondensation of lauryllacram, ε-caprolactam or udecanelactam is preferred.

Examples of the polymer that forms a soft segment include polyester and polyether, and specific examples thereof include polyethyelne glycol, polypropylene glycol, polytetramethylene ether glycol, and ABA-type triblock polyether. These polymers may be used alone or in combination of two or more kinds. It is also possible to use a polyether diamine or the like, which is obtained by allowing ammonia or the like to react with a terminal end of a polyether.

The ABA-type triblock polyether refers to a polyether having a structure represented by the following Formula (3).

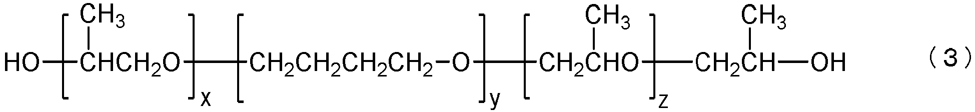

In Formula (3), each of x and z independently represents an integer of from 1 to 20, and y represents an integer of from 4 to 50.

In Formula (3), each of x and z is preferably independently an integer of from 1 to 18, more preferably an integer of from 1 to 16, further preferably an integer of from 1 to 14, yet further preferably an integer of from 1 to 12. In Formula (3), y is preferably an integer of from 5 to 45, more preferably an integer of from 6 to 40, further preferably an integer of from 7 to 35, yet further preferably an integer of from 8 to 30.

Examples of the combination of a hard segment and a soft segment include combinations of these selected from the hard segments and the soft segments as described above. Among the combinations, a combination of a ring-opening polycondensate of lauryl lactam and polyethylene glycol, a combination of a ring-opening polycondensate of lauryl lactam and polypropylene glycol, a combination of a ring-opening polycondensate of lauryl lactam and polytetramethylene ether glycol, and a combination of a ring-opening polycondensate of lauryl lactam and ABA-type triblock polyether are preferred. Among these combinations, a combination of a ring-opening polycondensate of lauryl lactam and ABA-type triblock polyether is more preferred.

The number average molecular weight of the polymer that forms a hard segment (polyamide) is preferably from 300 to 15000, from the viewpoint of melt moldability. The number average molecular weight of the polymer that forms a soft segment is preferably from 200 to 6000 from the viewpoint of toughness and low-temperature flexibility. The mass ratio (x : y) of the hard segment (x) and the soft segment (y) is preferably from 50 : 50 to 90 : 10, more preferably from 50 : 50 to 80 : 20, from the viewpoint of moldability.

The polyamide thermoplastic elastomer can be synthesized by a known process of copolymerizing a polymer that forms a hard segment and a polymer that forms a soft segment.

Examples of the commercially available products of the polyamide thermoplastic elastomer include the UBESTA XPA series of Ube Industries, Ltd. (for example, XPA9063X1, XPA9055X1, XPA9048X2, XPA9048X1, XPA9040X1, XPA9040X2 and XPA9044) and the VESTAMID series of Daicel-Evonik Ltd. (for example, E40-S3, E47-S1, E47-S3, E55-S1, E55-S3, EX9200 and E50-R2).

Since a polyamide thermoplastic elastomer satisfies the requirements for a tire frame in terms of elasticity (flexibility), toughness and the like, it is suitably used as the resin material. In addition, a polyamide thermoplastic elastomer generally exhibits a favorable adhesion with respect to a thermoplastic resin or a thermoplastic elastomer. Therefore, selecting a polyamide thermoplastic elastomer as the resin material for a tire frame tends to increase the number of choices of a material for the coating composition in view of the adhesion between the tire frame and the resin layer of the metal-resin composite.

### -Polystyrene thermoplastic elastomer-

Examples of the polystyrene thermoplastic elastomer include a material in which at least polystyrene forms a hard segment, and a polymer other than the polystyrene (such as polybutadiene, polyisoprene, polyethylene, hydrogenated polybutadiene or hydrogenated polyisoprene) forms a soft segment that is amorphous and has a low glass transition temperature.

Examples of the polystyrene that forms a hard segment include a polystyrene obtained by a known process such as radical polymerization or ionic polymerization, and specific examples thereof include a polystyrene obtained by anionic living polymerization.

Examples of the polystyrene that forms a soft segment include polybutadiene, polyisoprene and poly(2,3-dimethyl-butadiene).

Examples of the combination of a hard segment and a soft segment include combinations of these selected from the hard segments and the soft segments as described above. Among the combinations, a combination of polystyrene and polybutadiene and a combination of polystyrene and polyisoprene are preferred. In order to suppress unintentional crosslinking reaction of the thermoplastic elastomer, the soft segment is preferably hydrogenated.

The number average molecular weight of the polymer that forms a hard segment (polystyrene) is preferably from 5000 to 500000, more preferably from 10000 to 200000.

The number average molecular weight of the polymer that forms a soft segment is preferably from 5000 to 1000000, more preferably from 10000 to 800000, further preferably from 30000 to 500000. The mass ratio (x : y) of the hard segment (x) and the soft segment (y) is preferably from 5 : 95 to 80 : 20, more preferably from 10 : 90 to 70 : 30, from the viewpoint of moldability.

The polystyrene thermoplastic elastomer can be synthesized by a known process of copolymerizing a polymer that forms a hard segment and a polymer that forms a soft segment.

Examples of the polystyrene thermoplastic elastomer include styrene-butadiene copolymer such as SBS (polystyrene-poly(butylene)block-polystyrene) and SEBS (polystyrene-poly(ethylene/butylene)block-polystyrene); styrene-isoprene copolymer (polystyrene-polyisoprene block-polystyrene); and styrene-propylene copolymer such as SEP (polystyrene-(ethylene/propylene)block), SEPS (polystyrene-poly(ethylene/propylene)block-polystyrene), SEEPS (polystyrene-poly(ethylene-ethylene/propylene)block-polystyrene)block-polystyrene) and SEB (polystyrene(ethylene/butylene)block).

Examples of the commercially available products of the polystyrene thermoplastic elastomer include the TUFTEC series of Asahi Kasei Corporation (for example, H1031, H1041, H1043, H1051, H1052, H1053, H1062, H1082, H1141, H1221 and H1272), and the SEBS series of Kuraray Co., Ltd (for example, 8007 and 8076) and the SEPS series of Kuraray Co., Ltd (for example, 2002 and 2063).

### -Polyurethane thermoplastic elastomer-

Examples of the polyurethane thermoplastic elastomer include a material in which at least polyurethane forms a hard segment that forms a pseudo-crosslinking structure by physical aggregation, and a polymer other than the polyurethane that forms a soft segment that is amorphous and has a low glass transition temperature.

Specific examples of the polyurethane thermoplastic elastomer include the polyurethane thermoplastic elastomer (TPU) as specified by JIS K6418:2007. The polyurethane thermoplastic elastomer may be a copolymer of a soft segment including a structural unit represented by the following Formula A and a hard segment including a structural unit represented by the following Formula B.

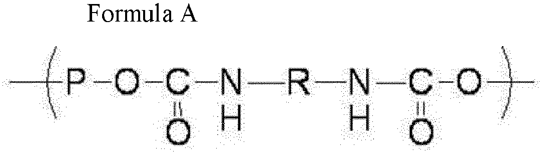

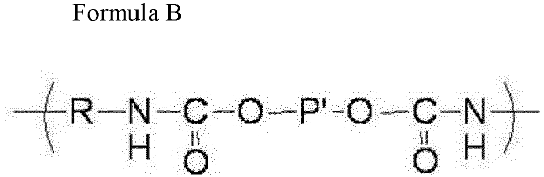

In the Formulae, P represents a long-chain aliphatic polyether or a long-chain aliphatic polyester. R represents an aliphatic hydrocarbon, an alicyclic hydrocarbon or an aromatic hydrocarbon. P' represents a short-chain aliphatic hydrocarbon, an alicyclic hydrocarbon or an aromatic hydrocarbon.

In Formula A, the long-chain aliphatic polyether or the long-chain aliphatic polyester represented by P may be a polyether or a polyester having a molecular weight of from 500 to 5000. The long-chain aliphatic polyether or the long-chain aliphatic polyester represented by P derives from a diol compound including the long-chain aliphatic polyether or the long-chain aliphatic polyester. Examples of the diol compound include polyethylene glycol, polypropylene glycol, polytetramethylene ether glycol, poly(butyleneadipate)diol, poly-ε-caprolactone diol, poly(hexamethylenecarbonate)diol and ABA-type triblock polyether compounds, having a molecular weight of the aforementioned range. These compounds may be used alone or in combination of two or more kinds.

In Formula A and Formula B, R derives from a diisocyanate compound including an aliphatic hydrocarbon, an alicyclic hydrocarbon or an aromatic hydrocarbon that is represented by R.

Examples of the diisocyanate compound including an aliphatic hydrocarbon represented by R include 1,2-ethylene diisocyanate, 1,3-propylene diisocyanate, 1,4-butane diisocyanate and 1,6-hexamethylene diisocyanate.

Examples of the diisocyanate compound including an alicyclic hydrocarbon represented by R include 1,4-cyclohexane diisocyanate and 4,4-cyclohexane diisocyanate.

Examples of the diisocyanate compound including an aromatic hydrocarbon represented by R include 4,4'-diphenylmethane diisocyanate and tolylene diisocyanate.

These compounds may be used alone or in combination of two or more kinds.

In Formula B, examples of the short-chain aliphatic hydrocarbon, the alicyclic hydrocarbon or the aromatic hydrocarbon represented by P' include those having a molecular weight of less than 500. P' derives from a diol compound including the short-chain aliphatic hydrocarbon, the alicyclic hydrocarbon or the aromatic hydrocarbon represented by P'.

Examples of the diol compound including a short-chain aliphatic hydrocarbon represented by P' include glycol and polyalkylene glycol, such as ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

Examples of the diol compound including an alicyclic hydrocarbon represented by P' include cyclopentane-1,2-diol, cyclohexane-1,2-diol, cyclohexane-1,3-diol, cyclohexane-1,4-diol and cyclohexane-1,4-dimethanol.

Examples of the diol compound including an aromatic hydrocarbon represented by P' include hydroquinone, resorcin, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenylsulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene and 2,6-dihydroxynaphthalene.

These compounds may be used alone or in combination of two or more kinds.

The number average molecular weight of the polymer that forms a hard segment (polyurethane) is preferably from 300 to 1500, from the viewpoint of melt moldability. The number average molecular weight of the polymer that forms a soft segment is preferably from 500 to 20000, more preferably from 500 to 5000, further preferably from 500 to 3000, from the viewpoint of flexibility and thermal stability of the polyurethane thermoplastic elastomer. The mass ratio (x : y) of the hard segment (x) and the soft segment (y) is preferably from 15 : 85 to 90 : 10, more preferably from 30 : 70 to 90 : 10, from the viewpoint of moldability.

The polyurethane thermoplastic elastomer may be synthesized by a known process of copolymerizing a polymer that forms a hard segment and a polymer that forms a soft segment. Examples of the polyurethane thermoplastic elastomer include the thermoplastic polyurethane described in JP-A No. 5-331256.

Specific examples of the polyurethane thermoplastic elastomer include a combination of a hard segment formed from an aromatic diol and an aromatic diisocyanate, and a soft segment formed from polycarbonate ester, preferably at least one selected from the group consisting of a copolymer of trilenediisocyanate (TDI) / polyester-based polyol, a copolymer of TDI / polyether-based polyol, a copolymer of TDI / caprolactone-based polyol, a copolymer of TDI / polycarbonate-based polyol, a copolymer of 4,4'-diphenylmethane diisocyanate (MDI) / polyester-based polyol, a copolymer of MDI / polyether-based polyol, a copolymer of MDI / caprolactone-based polyol, a copolymer of MDI / polycarbonate-based polyol, and a copolymer of MDI + hydroquinone / polyhexamethylene carbonate; more preferably at least one selected from the group consisting of a copolymer of TDI / polyester-based polyol, a copolymer of TDI / polyether-based polyol, a copolymer of MDI / polyester-based polyol, a copolymer of MDI / polyether-based polyol, and a copolymer of MDI + hydroquinone / polyhexamethylene carbonate.

Examples of the commercially available products of the polyurethane thermoplastic elastomer include the ELASTOLLAN series of BASF Japan Ltd. (for example, ET680, ET690 and ET890), the KURAMIRON U series of Kuraray Co., Ltd. (for example, No. 2000 series, No. 3000 series, No. 8000 series and No. 9000 series), and the MIRACTRAN series of Nippon Miractran Co., Ltd. (for example, XN-2001, XN-2004, P390RSUP, P480RSUI, P26MRNAT, E490, E590 and P890).

### -Polyolefin thermoplastic elastomer-

Examples of the polyolefin thermoplastic elastomer include materials in which at least a polyolefin forms a hard segment that is crystal and has a high melting point and a polymer other than the polyolefin that forms a soft segment (for example, polyolefin, other polyolefin and a polyvinyl compound) forms a soft segment that is amorphous and has a low glass transition temperature. Examples of the polyolefin that forms a hard segment include polyethylene, polypropylene, isotactic polypropylene and polybutene.

Examples of the polyolefin thermoplastic elastomer include an olefin-α-olefin random copolymer and an olefin block copolymer.

Specific examples of the polyolefin thermoplastic elastomer include propylene block copolymer, ethylene-propylene copolymer, propylene-1-hexene copolymer, propylene-4-methyl-1-pentene copolymer, propylene-1-butene copolymer, ethylene-1-hexene copolymer, ethylene-4-methyl-pentene copolymer, ethylene-1-butene copolymer, 1-butene-1-hexene copolymer, 1-butene-4-methyl-pentene copolymer, ethylene-methacrylic acid copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, propylene-methacrylic acid copolymer, propylene-methyl methacrylate copolymer, propylene-ethyl methacrylate copolymer, propylene-butyl methacrylate copolymer, propylene-methyl acrylate copolymer, propylene-ethyl acrylate copolymer, propylene-butyl acrylate copolymer, ethylene-vinyl acetate copolymer and propylene-vinyl acetate copolymer.

Among these copolymers, the polyolefin thermoplastic elastomer is preferably at least one selected from the group consisting of propylene block copolymer, ethylene-propylene copolymer, propylene-1-hexene copolymer, propylene-4-methyl-1-pentene copolymer, propylene-1-butene copolymer, ethyelne-1-hexene copolymer, ethyelne-4-methyl-pentene copolymer, ethylene-1-butene copolymer, ethylene-methacrylic acid copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, propylene methacrylic acid copolymer, propylene-methyl methacrylate copolymer, propylene-ethyl methacrylate copolymer, propylene-butyl methacrylate copolymer, propylene-methyl acrylate copolymer, propylene-ethyl acrylate copolymer, propylene-butyl acrylate copolymer and propylene-vinyl acetate copolymer; more preferably at least one selected from the group consisting of ethylene-propylene copolymer, propylene-1-butene copolymer, ethylene-1-butene copolymer, ethylene-methyl methacrylate copolymer, ethylene-methyl acrylate copolymer, ethylene-ethyl acrylate copolymer and ethylene-butyl acrylate copolymer.

It is possible to combine two or more kinds of polyolefin resins, such as ethylene and propylene. The content of the polyolefin resin in the polyolefin thermoplastic elastomer is preferably from 50% by mass to 100% by mass.

The number average molecular weight of the polyolefin thermoplastic elastomer is preferably from 5000 to 10000000. When the number average molecular weight of the polyolefin thermoplastic elastomer is from 5000 to 10000000, a resin material having sufficient mechanical properties and excellent processability can be obtained. From the same viewpoint, the number average molecular weight of the polyolefin thermoplastic elastomer is more preferably from 7000 to 1000000, further preferably from 10000 to 1000000. When the number average molecular weight is within this rage, mechanical properties and processability of the resin material can be further improved.

The number average molecular weight of the polymer that forms a soft segment is preferably from 200 to 6000, from the viewpoint of toughness and flexibility at low temperature. The mass ratio (x : y) of the hard segment (x) and the soft segment (y) is preferably from 50 : 50 to 95 : 5, more preferably from 50 : 50 to 90 : 10, from the viewpoint of moldability.

The polyolefin thermoplastic elastomer can be synthesized by a known process for copolymerization.

It is possible to use an acid-modified polyolefin thermoplastic elastomer as the polyolefin thermoplastic elastomer.

The acid-modified polyolefin thermoplastic elastomer refers to a polyolefin thermoplastic elastomer that is bonded with an unsaturated compound having an acidic group such as a carboxyl group, a sulfuric acid group or a phosphoric acid group.

Examples of the method of allowing an unsaturated compound having an acidic group to bond with a polyolefin thermoplastic elastomer include a method of allowing an unsaturated bonding site of an unsaturated carboxylic acid (generally maleic acid anhydride) to bond with a polyolefin thermoplastic elastomer.

The unsaturated compound having an acidic group is preferably an unsaturated compound having a carboxyl group that is relatively weak in acidity, from the viewpoint of suppressing degradation of the polyolefin thermoplastic elastomer, and examples of the unsaturated compound having a carboxyl group include acrylic acid, methacrylic acid, itaconic acid, crotonic acid, isocrotonic acid and maleic acid.

Examples of the commercially available products of the polyolefin thermoplastic elastomer include the TAFMER series of Mitsui Chemicals, Inc. (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480 and P-0680), the NUCREL series of Du Pont-Mitsui Polychemicals Co., Ltd. (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C and N035C), the ELVALOY AC series (for example, 1125AC, 1209AC, 1218AC, 1609AC, 1820AC, 1913AC, 2112AC, 2116AC, 2615AC, 2715AC, 3117AC, 3427AC and 3717AC), the ACRYFT series of Sumitomo Chemical Co., Ltd., the EVATATE series of Sumitomo Chemical Co., Ltd., the ULTRACENE series of Tosoh Corporation, the PRIME TPO series (for example, E-2900H, F-3900H, E-2900, F-3900, J-5900, E-2910, F-3910, J-5910, E-2710, F-3710, J-5910, E-2740, F-3740, R110MP, R110E, T310E and M142E).

### -Polyester thermoplastic elastomer-

Examples of the polyester thermoplastic elastomer include a material in which at least a polyester forms a hard segment that is crystalline and has a high melting point, and a polymer (for example, polyester or polyether) forms a soft segment that is amorphous and has a low glass transition temperature.

The polyester that forms a hard segment may be an aromatic polyester.

The aromatic polyester can be formed from, for example, an aromatic dicarboxylic acid or an ester-forming derivative thereof and an aliphatic diol. A preferred example of the aromatic polyester is a polybutylene terephthalate derived from terephthalic acid and/or dimethyl terephthalate and 1,4-butanediol. Other examples of the aromatic polyester include a polyester derived from a dicarboxylic acid (for example, isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid and an ester-forming derivative thereof) and a diol compound having a molecular weight of 300 or less (for example, an aliphatic diol such as ethylene glycol, trimethylene glycol, pentamethylene glycol, hexamethylene glycol, neopentyl glycol and decamethyelene glycol, an alicyclic diol such as 1,4-cyclohexane dimethanol and tricyclodecane dimethylol, and an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl and 4,4'-dihydroxy-p-quaterphenyl).

The polyester may be a copolymerized polyester in which two or more dicarboxylic acid components and two or more diol components are combined.

It is also possible to copolymerize a polyfunctional (at least trifunctional) carboxylic component such as a polyfunctional hydroxy acid component in an amount of within 5 mol%.

Preferred examples of the polyester that forms a hard segment include polyethylene terephthalate, polybutylene terephthalate, polymethylene terephthalate and polyethylene naphthalate, polybuthylene naphthalate, wherein polybutylene terephthalate is more preferred.

Examples of the polymer that forms a soft segment include an aliphatic polyester and an aliphatic polyether.

Examples of the aliphatic polyether include poly(ethylene oxide)glycol, polypropylene oxide)glycol, poly(tetramethylene oxide) glycol, poly(hexamethylene oxide)glycol, a copolymer of ethylene oxide and propylene oxide, an ethylene oxide-adduct of polypropylene oxide)glycol, and a copolymer of ethylene oxide and tetrahydrofuran.

Examples of the aliphatic polyester include poly(ε-caprolactone), polyenantholactone, polycaprylolactone, polybutylene adipate, and polyethylene adipate.

Among these aliphatic polyethers and aliphatic polyesters, from the viewpoint of elasticity of a polyester block copolymer, the polymer that forms a soft segment is preferably poly(tetramethylene oxide)glycol, an ethylene oxide-adduct of polypropylene oxide)glycol, poly(ε-caprolactone), polybutylene adipate and polyethylene adipate are preferred.

The number average molecular weight of the polymer that forms a soft segment is preferably from 300 to 6000, from the viewpoint of toughness and low-temperature flexibility. The mass ratio (x : y) of the hard segment (x) and the soft segment (y) is preferably from 99 : 1 to 20 : 80, more preferably from 98 : 2 to 30 : 70, from the viewpoint of moldability.

Examples of the combination of a hard segment and a soft segment include each of the combination of a hard segment and a soft segment as mentioned above.

Among these, the combination of a hard segment and a soft segment is preferably a combination in which a hard segment is polybutylene terephthalate and a soft segment is an aliphatic polyether, more preferably a combination in which a hard segment is polybutylene terephthalate and a soft segment is poly(ethylene oxide)glycol.

Examples of the commercially available products of the polyester thermoplastic elastomer include the HYTREL series of Du Pont-Toray Co., Ltd. (for example, 3046, 5557, 6347, 4047 and 4767) and the PELPRENE series of Toyobo Co., Ltd. (for example, P30B, P40B, P40H, P55B, P70B, P150B, P280B, P450B, P150M, S1001, S2001, S5001, S6001 and S9001).

The polyester thermoplastic elastomer can be synthesized by copolymerizing a polymer that forms a hard segment and a polymer that forms a soft segment by a known process.

The resin material may include a component other than a resin, as necessary. Examples of the component include a filler (such as silica, calcium carbonate and clay), an anti-aging agent, an oil, a plasticizer, a color former and a weatherproof agent.

When the resin material include a component other than a resin, the total content thereof is preferably 10% by mass or less, more preferably 5% by mass or less, with respect to the total resin material.

The melting point of the resin material is generally approximately from 100°C to 350°C. From the viewpoint of durability and productivity of the tire, the melting point of the resin material is preferably from 100°C to 250°C, more preferably from 120°C to 250°C.

The tensile elastic modulus of the resin material (tire frame) as defined by JIS K7113:1995 is preferably from 50 MPa to 1000 MPa, more preferably from 50 MPa to 800 MPa, further preferably from 50 MPa to 700 MPa. When the tensile elastic modulus of the resin material is from 50 MPa to 1000 MPa, attachment of the tire to a rim can be efficiently performed while maintaining the shape of the tire frame.

The tensile strength of the resin material (tire frame) as defined by JIS K7113:1995 is generally approximately from 15 MPa to 70 MPa, preferably from 17 MPa to 60 MPa, more preferably from 20 MPa to 55 MPa.

The tensile yield strength of the resin material (tire frame) as defined by JIS K7113:1995 is preferably 5 MPa to more, more preferably from 5 MPa to 20 MPa, further preferably from 5 MPa to 17 MPa. When the tensile yield strength of the resin material is 5 MPa or more, endurance of the tire against deformation caused by a load applied to the tire during running a car can be improved.

The tensile yield elongation of the resin material (tire frame) as defined by JIS K7113:1995 is preferably 10% or more, more preferably from 10% to 70%, further preferably from 15% to 60%. When the tensile yield elongation of the resin material is 10% or more, the elastic region is large and attachment to a rim can be favorably performed.

The tensile elongation at break of the resin material (tire frame) as defined by JIS K7113:1995 is preferably 50% or more, more preferably 100% or more, further preferably 150% or more, yet further preferably 200% or more. When the tensile elongation at break of the resin material is 50% or more, attachment to a rim can be favorably performed and breakage caused by impact can be suppressed.

The deflection temperature under load (0.45MPa) of the resin material (tire frame) as defined by ISO 75-2 or ASTM D648 is preferably 50°C or more, more preferably from 50°C to 150°C, further preferably from 50°C to 130°C. When the deflection temperature under load is 50°C or more, deformation of the tire frame can be suppressed even in a case of performing vulcanization in the production of the tire.

The Martens hardness of the tire frame (d1), the Martens hardness of the resin layer (d2) and the Martens hardness of the adhesive layer (d3) preferably satisfy a relationship of d1 ≦ d2 < d3. When the resin layer has a Martens hardness that is smaller than that of the adhesive layer but is greater than or equal to that of the tire frame, difference in stiffness between the resin material that forms the tire frame and the metal cord can be relaxed effectively. As a result, durability of the tire can be further improved.

A schematic sectional view of a tire in which the composite member is disposed is shown in Fig. 2 as an exemplary embodiment of the invention.

In Fig. 2, the adhesive layer in the composite member is not described for simplification. The size or the shape of the members in tire 10 are schematically illustrated, and the actual size or the actual shape thereof is not limited thereto.

Tire 10 shown in Fig. 2 has tire case 17 (corresponding to a tire frame) that is formed from a resin material, for example, and has an annular shape. Tire case 17 includes bead portion 14, side portion 16 and crown portion 18. Cover layer 22 is provided at a portion outside bead portion 14 and side portion 16. Tire case 17 may be produced by integrally forming bead portion 14, side portion 16 and crown portion 18 in the same process, or may be produced by assembling the members that are independently formed. From the viewpoint of production efficiency, tire case 17 is preferably produced in an integral manner.

Bead portion 14 is a portion that contacts a rim (not shown), and bead core 20 that has an annular shape and extends along a circumferential direction of the tire is embedded therein. Bead core 20 is formed from a composite material. Cover layer 22 is provided for the purpose of improving airtightness between tire case 17 and the rim, and is formed from a material that is softer and higher in weather resistance as compared with tire case 17. Cover layer 22 may not be provided to tire case 17.

Crown portion 18 is a portion corresponding to a surface of tire 10 that contacts the ground, and belt layer 12 (reinforcing member or belt member) is provided thereon. Over belt layer 12, tread 30 is provided via cushion rubber 32. Belt layer 12 is formed from the composite member. The material for cushion rubber 32 and tread 30 is not specifically limited, and may be selected from common rubber materials used for the production of a tire.

The composite material is disposed both at crown portion 18 and bead portion 14 of the tire shown in Fig. 2, but may be disposed only either crown portion 18 or bead portion 14. Further, although the composite member disposed at crown portion 18 includes two metal cords and the composite member disposed at bead portion 14 includes three metal cords, the configuration of the composite member is not limited thereto.

The method for producing tire case 17 is not specifically limited. For example, tire case 17 may be produced by welding two pieces of tire case halves, which are individually formed by injection molding or the like and have a shape being divided at an equatorial plane of tire case 17 (shown as CL in Fig. 2), at an equatorial plane thereof.

The method for forming belt layer 12 at crown portion 18 of tire case 17 using the composite member is not specifically limited. For example, belt layer 12 may be formed by reeling out the composite member and winding the same around crown portion 18 for a predetermined number of times while rotating tire case 17. The resin layer of the composite member may be welded to crown portion 18 by applying heat and pressure.

The method for forming bead core 20 at bead portion 14 of tire case 17 using the composite member is not specifically limited. For example, bead core 20 may be formed by preparing a member having an annular shape from the composite member, and embedding the same in bead portion 14.

### [Examples]

In the following, the invention is explained in further details with reference to the Examples. However, the invention is not limited to these Examples, but only by the appended claims.

### (1) Preparation of composite member

Composite members having cross-sectional shapes shown as (A) to (D) in Fig. 1 were prepared by extrusion molding, respectively. For the preparation, a multifilament with an average diameter of 1.15 mm produced by twisting 7 monofilaments with an average diameter of 0.35 mm (steel, strength: 280N, elongation: 3%), an acid-modified polypropylene (ADMER QE060 from Mitsui Chemicals, Inc.) for forming an adhesive layer, and a polyamide thermoplastic elastomer (UBESTA XPA 9055X1 from Ube Industries, Ltd.) for forming a resin layer were used. The cross-sectional shape was adjusted by changing the shape of a die used for extrusion molding.

### (2) Preparation of tire

A tire having a configuration as shown in Fig. 2 (tire size: 165/50R16) was prepared using the composite member prepared by a process as described above. A polyamide thermoplastic elastomer (UBESTA XPA 9055X1 from Ube Industries, Ltd.) was used as the material for a tire case, and the composite member was disposed at a crown portion of the tire.

### (3) Evaluation of adhesion durability

A running test for the tire was performed by the following conditions. After the test, the tire was divided equally into four pieces in a direction perpendicular to an axial direction, and the number of cracks formed at an interface between the adhesive layer and the resin layer, shown at the sections of the four pieces, was counted. The results are shown in Table 1.

### (Conditions for running test)

The tire is attached with a rim with a standard rim size according to JATMA standard. At a maximum inner pressure of JATMA standard, the tire is allowed to run at a rate of 60 km/hour for 10,000 km under a lord of 1.8 times the JATMA maximum load. The test is performed with a drum tester having a smooth steel drum surface with a diameter of 1.707 m, while controlling the environmental temperature at 30±3°C.

**Table 1**

| | Cross-sectional shape of composite member | Number of cracks |
|---|---|---|
| Comparative Example 1 | (A) | 8 |
| Example 1 | (B) | 2 |
| Comparative Example 2 | (C) | 32 |
| Comparative Example 3 | (D) | 10 |

As shown in Table 1, the composite member of Example 1, having a cross-sectional shape that satisfies (1), has fewer cracks at an interface between the adhesive layer and the resin layer after the running test, showing excellent adhesion durability, as compared with the composite members of the Comparative Examples having a cross-sectional shape that does not satisfy (1).

## Claims

1. A metal-resin composite member for a tire (10), comprising plural metal cords (1) that are positioned alongside each other, an adhesive layer (2) that is disposed on the metal cords (1), and a resin layer (3) that is disposed on the adhesive layer (2), **characterized in that**:
the adhesive layer (2) is integrally disposed on all of the plural metal cords (1), and when a cross-section of the metal-resin composite member is viewed perpendicularly to a length direction of the metal cords (1), a region consisting of the metal cords (1) and the adhesive layer (2) has a cross-sectional shape that has, between the metal cords (1), a portion that is narrower in width than a portion at which the metal cords (1) are disposed,
wherein the term width of a section of the region consisting of metal cords (1) and adhesive layer (2) refers to a dimension of the region in a direction perpendicular to a line that connects the metal cords (1), and
wherein the resin layer does not contain vulcanized rubber.

2. The metal-resin composite member for a tire (10) according to claim 1, wherein the region consisting of the plural metal cords (1) and the adhesive layer (2) has a cross-sectional shape that has, between the metal cords (1), a portion that is narrower in width than a diameter of a section of the metal cords (1).

3. The metal-resin composite member for a tire (10) according to claim 1 or claim 2, wherein the adhesive layer (2) comprises a thermoplastic resin.

4. The metal-resin composite member for a tire (10) according to any one of claim 1 to claim 3, wherein the resin layer (3) comprises a thermoplastic elastomer.

5. The metal-resin composite member for a tire (10) according to any one of claim 1 to claim 4, wherein the resin layer (3) comprises at least one selected from the group consisting of a polyamide thermoplastic elastomer (TPA) and a polyester thermoplastic elastomer (TPC).

6. The metal-resin composite member for a tire (10) according to any one of claim 1 to claim 4, wherein the resin layer (3) comprises a polyamide thermoplastic elastomer (TPA), and the adhesive layer (2) comprises an acid-modified polyolefin resin.

7. The metal-resin composite member for a tire (10) according to any one of claim 1 to claim 4, wherein the resin layer (3) comprises a polyester thermoplastic elastomer (TPC), and the adhesive layer (2) comprises a modified polyester resin.

8. A tire (10) comprising a tire frame (17) preferably formed of resin material and the metal-resin composite member for a tire (10) according to any one of claim 1 to claim 7.

9. The tire (10) according to claim 8, wherein the metal-resin composite member for a tire (10) is disposed as a reinforcing member.

10. The tire (10) according to claim 9, wherein the reinforcing member is a belt member.

11. The tire (10) according to claim 8, wherein the metal-resin composite member for a tire (10) is a bead member.

## Patentansprüche

1. Metall-Harz-Verbundstoffelement für einen Reifen (10), das mehrere Metallkords (1), die nebeneinander platziert sind, eine Klebstoffschicht (2), die auf den Metallkords (1) angeordnet ist, und eine Harzschicht (3), die auf der Klebstoffschicht (2) angeordnet ist, umfasst, **dadurch gekennzeichnet, dass**:
die Klebstoffschicht (2) integral auf allen der mehreren Metallkords (1) versehen ist, und wenn ein Querschnitt des Metall-Harz-Verbundstoffelements senkrecht zu einer Längsrichtung der Metallkords (1) betrachtet wird, ein Bereich, der aus den Metallkords (1) und der Klebstoffschicht (2) besteht, eine Querschnittsform aufweist, die, zwischen den Metallkords (1), einen Abschnitt aufweist, der in der Breite schmaler ist als ein Abschnitt, bei dem die Metallkords (1) angeordnet sind,
wobei sich der Begriff Breite eines Schnittes des Bereichs, der aus Metallkords (1) und Klebstoffschicht (2) besteht, auf eine Abmessung des Bereichs in einer Richtung, senkrecht zu einer Linie, welche die Metallkords (1) verbindet, bezieht und
wobei die Harzschicht keinen vulkanisierten Kautschuk enthält.

2. Metall-Harz-Verbundstoffelement für einen Reifen (10) nach Anspruch 1, wobei der Bereich, der aus den mehreren Metallkords (1) und der Klebstoffschicht (2) besteht, eine Querschnittsform aufweist, die, zwischen den Metallkords (1), einen Abschnitt aufweist, der in der Breite schmaler ist als ein Durchmesser eines Schnittes der Metallkords (1).

3. Metall-Harz-Verbundstoffelement für einen Reifen (10) nach Anspruch 1 oder Anspruch 2, wobei die Klebstoffschicht (2) ein thermoplastisches Harz umfasst.

4. Metall-Harz-Verbundstoffelement für einen Reifen (10) nach einem der Ansprüche 1 bis 3, wobei die Harzschicht (3) ein thermoplastisches Elastomer umfasst.

5. Metall-Harz-Verbundstoffelement für einen Reifen (10) nach einem der Ansprüche 1 bis 4, wobei die Harzschicht (3) mindestens eines umfasst, das ausgewählt ist aus der Gruppe, die aus einem thermoplastischen Polyamidelastomer (TPA) und einem thermoplastischen Polyesterelastomer (TPC) besteht.

6. Metall-Harz-Verbundstoffelement für einen Reifen (10) nach einem der Ansprüche 1 bis 4, wobei die Harzschicht (3) ein thermoplastisches Polyamidelastomer (TPA) umfasst und die Klebstoffschicht (2) ein säuremodifiziertes Polyolefinharz umfasst.

7. Metall-Harz-Verbundstoffelement für einen Reifen (10) nach einem der Ansprüche 1 bis 4, wobei die Harzschicht (3) ein thermoplastisches Polyesterelastomer (TPC) umfasst und die Klebstoffschicht (2) ein modifiziertes Polyesterharz umfasst.

8. Reifen (10), der einen Reifenrahmen (17) umfasst, der vorzugsweise aus Harzmaterial und dem Metall-Harz-Verbundstoffelement für einen Reifen (10) nach einem der Ansprüche 1 bis 7 geformt ist.

9. Reifen (10) nach Anspruch 8, wobei das Metall-Harz-Verbundstoffelement für einen Reifen (10) als ein Verstärkungselement platziert ist.

10. Reifen (10) nach Anspruch 9, wobei das Verstärkungselement ein Gürtelelement ist.

11. Reifen (10) nach Anspruch 8, wobei das Metall-Harz-Verbundstoffelement für einen Reifen (10) ein Wulstelement ist.

## Revendications

1. Elément composite métal-résine pour un pneumatique (10), comprenant plusieurs câblés métalliques (1) qui sont positionné le long les uns des autres, une couche adhésive (2) qui est disposée sur les câblés métalliques (1) et une couche de résine (3) qui est disposée sur la couche adhésive (2), **caractérisé en ce que** :
la couche adhésive (2) est disposée intégralement sur l'ensemble des plusieurs câblés métalliques (1), et lorsqu'une section transversale de l'élément composite métal-résine est vue perpendiculairement à une direction de la longueur des câblés métalliques (1), une région constituée par les câblés métalliques (1) et la couche adhésive (2) a une forme de section transversale comportant, parmi les câblés métalliques (1), une partie qui a une largeur plus étroite qu'une partie au niveau de laquelle les câbles métalliques (1) sont disposés ;
dans lequel le terme largeur d'une section de la région constituée par les câblés métalliques (1) et la couche adhésive (2) se réfère à une dimension de la région dans une direction perpendiculaire à une ligne qui relie les câblés métalliques (1) ; et
dans lequel la couche de résine ne contient pas de caoutchouc vulcanisé.

2. Elément composite métal-résine pour un pneumatique (10) selon la revendication 1, dans lequel la région constituée par les plusieurs câblé métalliques (1) et la couche adhésive (2) a une forme de section transversale qui comporte, entre les câblés métalliques (1), une partie qui a une largeur plus étroite qu'un diamètre d'une section des câblés métalliques (1).

3. Elément composite métal-résine pour un pneumatique (10) selon les revendications 1 ou 2, dans lequel la couche adhésive (2) comprend une résine thermoplastique.

4. Elément composite métal-résine pour un pneumatique (10) selon l'une quelconque des revendications 1 à 3, dans lequel la couche de résine (3) comprend un élastomère thermoplastique.

5. Eliment composite métal-résine pour un pneumatique (10) selon l'une quelconque des revendications 1 à 4, dans lequel la couche de résine (3) comprend au moins un élément sélectionné dans le groupe constitué d'un élastomère thermoplastique de polyamide (TPA) et d'un élastomère thermoplastique de polyester (TPC).

6. Elément composite métal-résine pour un pneumatique (10) selon l'une quelconque des revendications 1 à 4, dans lequel la couche de résine (3 comprend un élastomère thermoplastique de polyamide (TPA) et la couche adhésive (2) comprend une résine de polyoléfine modifiée par acide.

7. Elément composite métal-résine pour un pneumatique (10) selon l'une quelconque des revendications 1 à 4, dans lequel la couche de résine (3) comprend un élastomère thermoplastique de polyester (TPC) et la couche adhésive (2) comprend une résine de polyester modifiée.

8. Pneumatique (10), comprenant un cadre de pneumatique (17) composé de préférence d'un matériau de résine et de l'élément composite métal-résine pour un pneumatique (10) selon l'une quelconque des revendications 1 à 7.

9. Pneumatique (10) selon la revendication 8, dans lequel l'élément composite métal-résine pour un pneumatique (10) est disposé en tant qu'élément de renforcement.

10. Pneumatique (10) selon la revendication 9, dans lequel l'élément de renforcement est un élément de ceinture.

11. Pneumatique (10) selon la revendication 8, dans lequel l'élément composite métal-résine pour un pneumatique (10) est un élément de talon.
